# EUROPÄISCHE PATENTSCHRIFT

(11) **EP 1 319 841 B1**
(45) Veröffentlichungstag und Bekanntmachung des Hinweises auf die Patenterteilung: **30.03.2005**
(21) Anmeldenummer: 02450017.5
(22) Anmeldetag: 30.01.2002
(51) Int. Cl.: F04C 29/08

(54) **Drosselklappenventil für Rotationsverdichter**
Valve for rotary compressors
Soupape de contrôle pour compresseurs rotatifs

(30) Priorität: 12.02.2001 AT 2052001
(43) Veröffentlichungstag der Anmeldung: 18.06.2003
(73) Patentinhaber: Hoerbiger Kompressortechnik Holding GmbH, 1040 Wien (AT)
(72) Erfinder: Horvath, Josef Markus, 7304 Nebersdorf (AT)
(74) Vertreter: Pinter, Rudolf, Dipl.-Ing.

(56) Entgegenhaltungen:
- EP-A- 0 233 445
- DE-A- 3 447 797

## Beschreibung

Die Erfindung betrifft eine Einrichtung zum Regeln der Fördermenge von Rotationsverdichtern, mit einem den Durchgangsquerschnitt der Saugleitung regelbar verändernden Drosselklappventil und einem in Durchströmrichtung dahinter in einem gemeinsamen Gehäuse angeordneten Rückschlagklappenventil.

Zur Anpassung der Fördermenge von Rotationsverdichtern an den jeweiligen Bedarf ist es bekannt, den Durchgangsquerschnitt der Saugleitung durch ein eingebautes Drosselklappenventil zu verändern. Unabhängig davon ist es bei derartigen Verdichtern zumeist auch erforderlich, die Saugleitung nach dem Abstellen des Verdichters dicht abschließen zu können, damit das verdichtete Medium nicht rückströmen kann, da dieses zumeist zur Schmierung oder Kühlung eingespritztes Öl enthält.

Aus der DE 34 47 797 C2 ist beispielsweise eine Einrichtung der eingangs genannten Art bekannt, bei der das Element zur Rückströmverhinderung und die regelbare Drossel als Klappenventil ausgebildet und im gemeinsamen Gehäuse im gleichen Durchströmweg hintereinander angeordnet sind, was geringe Druckverluste bei unabhängig voneinander optimierbaren Funktionen der beiden Ventile ermöglicht. Speziell zufolge der seitlichen Schwenklagerung der mittels eines Gewichtes oder einer Feder in Schließrichtung belasteten Rückschlagklappe ist bei dieser bekannten Ausführung aber ein relativ kompliziert ausgeführtes Gehäuse für die beiden Ventile erforderlich, dessen Herstellung und Bearbeitung relativ aufwendig und kostenintensiv ist. Weiters ist bei dieser bekannten Gehäusekonstruktion zufolge der vorgegebenen Durchströmverhältnisse auch keine Möglichkeit für Variationen bezüglich der Anschlussgeometrie gegeben, sodass in unterschiedlichen Richtungen liegende Anschlüsse nur durch die Gesamt-Baumaße vergrößernde zusätzliche Verbindungsstücke realisiert werden können.

Aufgabe der vorliegenden Erfindung ist es, eine Einrichtung der eingangs genannten Art so zu verbessern, dass die angesprochenen Nachteile der bekannten entsprechenden Einrichtungen vermieden werden und dass insbesonders unter Beibehaltung der funktionellen Vorteile eine Vereinfachung der Gesamtkonstruktion zur Erleichterung der Herstellung und Bearbeitung und damit insgesamt eine Kostenreduzierung möglich wird. Weiters soll auch mit einfachen Mitteln eine Verringerung der Gesamt-Dimensionen bei möglichst variierbaren Anschlussgeometrien gegeben sein.

. Diese Aufgabe wird gemäß der vorliegenden Erfindung bei einer Einrichtung der eingangs genannten Art dadurch gelöst, dass das Gehäuse zwischen den beiden Ventilen in einer zu den Ebenen der beiderseitigen Anschlussflansche geneigt liegenden Teilungsebene geteilt und mit verschiedenen Relativpositionen der beiden Gehäuseteile zusammenbaubar ist. Die Teilung im Bereich zwischen den beiden Klappenventilen ermöglicht grundsätzlich eine voneinander unabhängige Optimierung der beiden Gehäuseteile speziell im Hinblick auf die Herstellung im kostengünstigen Druck- bzw. Spritzguss sowie auf konstruktiv einfache Weise das Vorsehen von verschiedenen zusammenbaubaren Relativpositionen der beiden Gehäuseteile, wobei durch die Neigung der Teilungsebene zwischen den beiderseitigen Anschlussflanschen auf jeden Fall unterschiedlichen Relativpositionen der beiden zusammengebauten Gehäuseteile auch unterschiedliche Anschlussgeometrien entsprechen.

Besonders bevorzugt ist dabei eine Ausgestaltung der Erfindung, gemäß welcher die Teilungsebene um 45° geneigt zu den in einer möglichen Relativposition der beiden Gehäuseteile zueinander parallel liegenden Ebenen der beidseitigen Anschlussflansche liegt, wobei im Bereich der Teilungsebene außerhalb des Durchströmquerschnittes zwei parallel zueinander ausgerichtete Führungselemente an den beiden Gehäuseteilen angeordnet sind, welche eine Relatiwerdrehung der beiden Teile um 180° erlauben. Damit kann also auf sehr einfache Weise eine für die praktische Anwendung zumeist ausreichende Verstellung der Relativpositionen der beiden Anschlussflansche dahingehend erreicht werden, dass in der einen möglichen Zusammenbaustellung diese in parallelen Ebenen liegen, wogegen in der anderen möglichen Zusammenbaustellung die beiden Anschlussflansche in zwei zueinander senkrecht stehenden Ebenen angeordnet sind. Im einen Fall wird die Gesamt-Einrichtung von der Einström- zur Ausströmseite (mit zweimaliger, gegenläufig gerichteter 45°-Umlenkung) im wesentlichen geradlinig durchströmt, wogegen im anderen Falle mit zweimal in gleicher Richtung erfolgender 45°-Umlenkung de facto eine Gesamtumlenkung der Durchströmung um 90° erfolgt. Für diese beiden Varianten sind also nur jeweils gleich ausgebildete Gehäuseteile erforderlich - die benötigte Anschluss-Variante entsteht erst bei der Montage ohne weitere unterschiedliche Zusatzteile.

. An den Führungselementen der beiden Gehäuseteile können zur Festlegung der gegenseitigen Position zusammenwirkende Ausnehmungen und Vorsprünge vorgesehen sein, wobei in bevorzugter weiterer Ausgestaltung der Erfindung zur gegenseitigen Fixierung der beiden Gehäuseteile zwischen den zusammenwirkenden Führungselementen vorzugsweise stiftartig ausgebildete Einschubelemente in entsprechenden nutartigen Ausnehmungen eingesteckt sind. Diese Ausgestaltungen ermöglichen einen einfachen Zusammenbau bzw. eine einfache und sichere Fixierung der beiden Gehäuseteile relativ zueinander.

Nach einer besonders bevorzugten weiteren Ausgestaltung der Erfindung ist vorgesehen, dass beide Gehäuseteile sich zu ihren Anschlussflanschen hin hinterschneidungsfrei stetig erweitern und in Spritz- oder Druckgusstechnik, vorzugsweise aus faserverstärkten Kunststoffen oder Aluminium, hergestellt sind. Damit kann die Herstellung der beiden Gehäuseteile weiter vereinfacht und auch kostengünstiger gestaltet werden - es sind keine Sandkerne bzw. keine nur kompliziert zu entfernende Kernteile bei der Herstellung notwendig. Speziell beispielsweise bei Herstellung der beiden Gehäuseteile in Aluminium-Druckgusstechnik können die zusammenwirkenden Anschluss- und Dichtflächen in den Gehäuseteilen so präzise hergestellt werden, dass keine weitere spanabhebende Bearbeitung mehr erforderlich ist, was naturgemäß die Herstellungskosten weiter senkt.

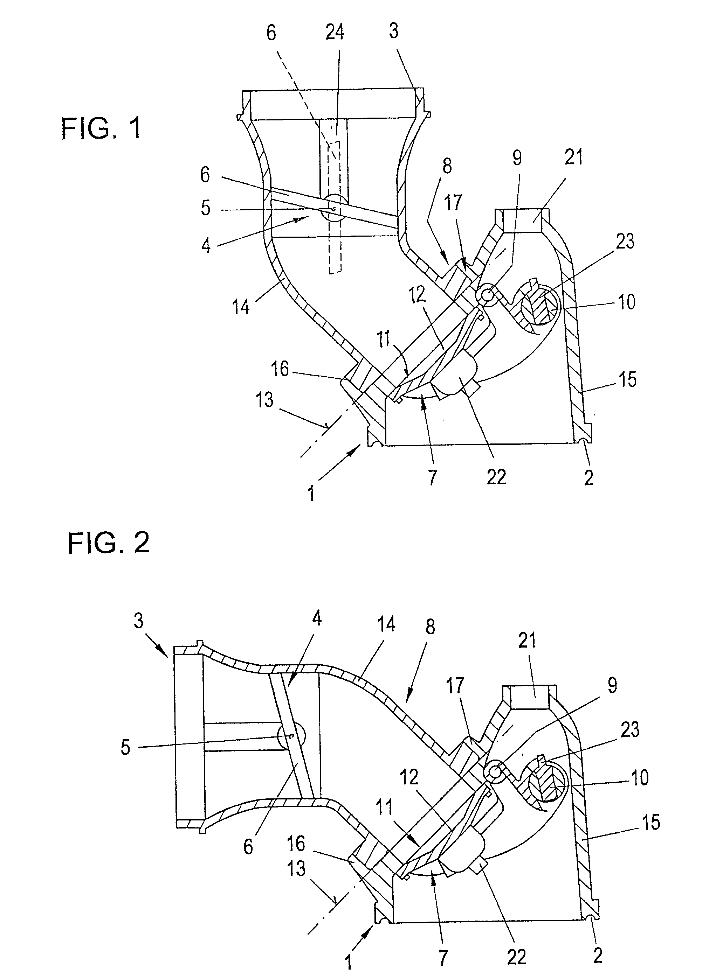

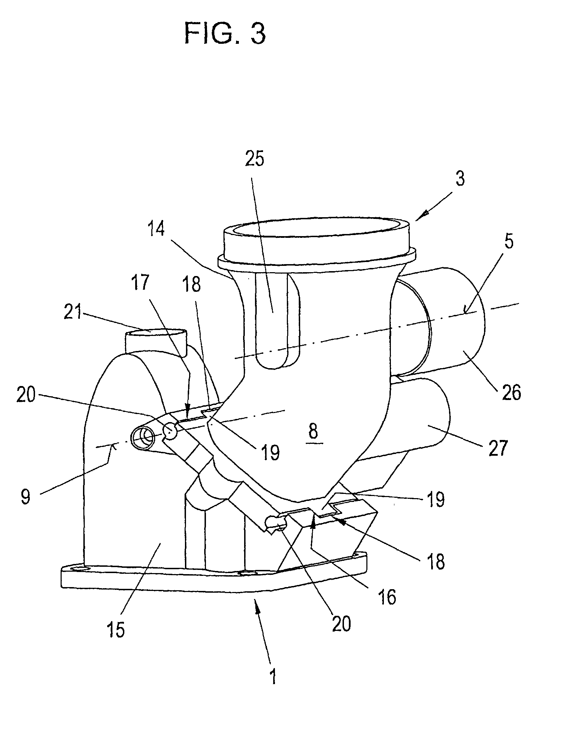

Die Erfindung wird im folgenden noch anhand des in der Zeichnung teilweise schematisch dargestellten Ausführungsbeispiels näher erläutert. Fig. 1 und 2 zeigen dabei Schnitte durch eine erfindungsgemäße Einrichtung mit jeweils in unterschiedlichen Relativpositionen zusammengebauten Gehäuseteilen und Fig. 3 zeigt eine perspektivische Ansicht der Variante nach Fig. 1 von schräg hinten.

Die dargestellte Einrichtung zum Regeln der Fördermenge von Rotationsverdichtern ist im Betrieb mit dem in der Darstellung unteren Anschlussflansch 1 - abgedichtet beispielsweise durch einen in die umlaufende Nut 2 eingelegten O-Ring - mit der Einlass- bzw. Ansaugöffnung des nicht weiter dargestellten Rotationsverdichters verbunden. Der in der Darstellung obere Anschlussflansch 3 ist auf ebenfalls nicht weiter dargestellte Weise mit einer anschließenden Zuführleitung bzw. einem Schalldämpfer, einem Luftfilter oder dergleichen verbunden. Zur Regelung des Durchgangsquerschnitts der damit durch die dargestellte Einrichtung führenden Saugleitung ist ein Drosselklappenventil 4 vorgesehen, welches eine um eine senkrecht zur Darstellungsebene der Fig. 1 und 2 liegende Achse 5 schwenkbare Drosselklappe 6 aufweist, die den Durchgangsquerschnitt in der dargestellten Lage abschließt und in einer in Fig. 1 strichliert angedeuteten Position weitgehend vollständig freigibt. Weiters ist in Durchströmrichtung dem Drosselklappenventil 4 ein Rückschlagklappenventil 7 im gemeinsamen Gehäuse 8 angeordnet, das eine um eine Achse 9 (in Fig. 1 und 2 wiederum senkrecht zur Darstellungsebene) schwenkbare, mit einem Gegengewicht 10 in Schließrichtung auf einen Sitz 11 hin vorbelastete Rückschlagklappe 12 aufweist und die Rückströmung des verdichteten Mediums von der Seite des Verdichters her unterbindet.

Das Gehäuse 8 ist zwischen den beiden Ventilen 4, 7 in einer zu den Ebenen der beiderseitigen Anschlussflansche 1, 3 geneigt liegenden Teilungsebene 13 geteilt und damit in aus den Fig. 1 bis 3 leicht ersichtlicher Weise mit verschiedenen Relativpositionen der beiden Gehäuseteile 14, 15 zusammenbaubar. Die Teilungsebene 13 liegt bei der dargestellten Ausführung um 45° geneigt zu den beiderseitigen Anschlussflanschen 1, 3, wobei im Bereich der Teilungsebene 13 außerhalb des Durchströmquerschnittes seitlich zwei parallel zueinander ausgerichtete Führungselemente 16, 17 an den beiden Gehäuseteilen 14, 15 angeordnet sind, welche eine Relatiwerdrehung der beiden Teile um 180° erlauben und damit die in den Fig. 1 und 2 dargestellten unterschiedlichen Relativpositionen der beiden Gehäuseteile 14, 15. Damit kann auf sehr einfache Weise sichergestellt werden, dass der Anschluss am in der Darstellung oberen Anschlussflansch 3 entweder gemäß Fig. 1 nach oben oder gemäß Fig. 2 nach der Seite weggeht, was zur Berücksichtigung der örtlichen Einbaubedingungen sehr vorteilhaft ist und keinerlei zusätzliche, die Lagerhaltung komplizierter machende und die Dimensionen der Gesamtanordnung vergrößernde Anschlussteile erfordert.

Zur Festlegung der gegenseitigen Position der beiden Gehäuseteile 14, 15 sind an den Führungselementen 16, 17 zusammenwirkende Ausnehmungen und Vorsprünge 18, 19 (siehe Fig. 3) vorgesehen, wobei zur gegenseitigen Fixierung der beiden Gehäuseteile 14, 15 bzw. der zusammenwirkenden Führungselemente 16, 17 zwischen diesen hier nicht separat dargestellte, vorzugsweise stiftartig ausgebildete Einschubelemente in nutartigen Ausnehmungen 20 einsteckbar sind.

Beide Gehäuseteile 14, 15 erweitern sich zu ihren äußeren Anschlussflanschen 1 bzw. 3 hin stetig und hinterschneidungsfrei (siehe Fig. 1 und 2), sodass auf sehr einfach und kostengünstige Weise die gusstechnische Herstellung ohne Sandkern oder sonstige kompliziert zu montierende und zu demontierende Kernteile möglich ist. Bevorzugt ist die Herstellung in Spritz- oder Druckgusstechnik, wobei z.B. faserverstärkte Kunststoffe oder Aluminium zum Einsatz kommen können. Insbesonders bei Herstellung in Aluminium-Druckgusstechnik können die Teile so präzise hergestellt werden, dass keine nachträgliche Bearbeitung der zusammenwirkenden Führungselemente 16, 17, des Sitzes 11 oder der Anschlussflansche 1, 3 (samt Dichtungsnuten und dergleichen) erforderlich ist.

Nur der Vollständigkeit halber ist hier noch auf einen im oberen Bereich des Gehäuseteiles 15 vorgesehenen, in Betrieb der Einrichtung verschlossenen Anschlussstutzen 21 sowie auf zwei aus elastischem Material bestehende Anschlagkörper 22, 23 zur Bewegungsbegrenzung bzw. Anschlagdämpfung der Rückschlagklappe 12 in der nicht dargestellten Offenstellung des Rückschlagklappenventils 7 zu verweisen.

Die Montage des Rückschlagklappenventils 7 erfolgt durch Einführen der kompletten Rückschlagklappe 12 von unten her über den Flansch 1, wonach die Achse 9 von außen durchgesteckt und fixiert werden kann. Das Drosselklappenventil 4 wird durch Einführen der Drosselklappe 6 von der Seite des oberen Anschlussflansches 3 her über die Nut 24 in der seitlichen Gehäuseausbuchtung 25 ermöglicht, wonach gemäß Fig. 3 seitlich der Verstellmotor 26 mit der Achse 5 der Drosselklappe 6 verbunden und entsprechend befestigt werden kann. Ebenfalls aus Fig. 3 ist noch ein seitlich an der Einrichtung vorgesehenes Entlüftungsventil-Gehäuse 27 vorgesehen, dessen Schaltelemente auf hier nicht dargestellte Weise zusammen mit der Drosselklappe betätigt werden können.

Abgesehen von der dargestellten und besprochenen Ausbildung könnten die beiden Gehäuseteile bezüglich der relativen Lage zwischen den Anschlussflanschen und der Teilungsebene sowie auch bezüglich der Anordnung und Ausrichtung der gegenseitigen Führungselemente abweichend ausgeführt sein, womit auf unmittelbar einsichtige Weise auch andere bzw. weitere Relativpositionen der beiden Anschlussflansche zueinander realisiert werden könnten. Weiters könnte für Anwendungen mit anderer Fördermengenregelung des Verdichters (z.B. über eine Drehzahlregelung) der obere Gehäuseteil 14 bedarfsweise auch ohne eingebautes Drosselklappenventil ausgebildet werden.

## Patentansprüche

1. Einrichtung zum Regeln der Fördermenge von Rotationsverdichtern, mit einem den Durchgangsquerschnitt der Saugleitung regelbar verändernden Drosselklappenventil (4) und einem in Durchströmrichtung dahinter in einem gemeinsamen Gehäuse (8) angeordneten Rückschlagklappenventil (7), **dadurch gekennzeichnet, dass** das Gehäuse (8) zwischen den beiden Ventilen (4,7) in einer zu den Ebenen der beiderseitigen Anschlussflansche (1,3) geneigt liegenden Teilungsebene (13) geteilt und mit verschiedenen Relativpositionen der beiden Gehäuseteile (14,15) zusammenbaubar ist.

2. Einrichtung nach Anspruch 1, **dadurch gekennzeichnet, dass** die Teilungsebene (13) um 45° geneigt zu den in einer möglichen Relativposition der beiden Gehäuseteile (14,15) zueinander parallel liegenden Ebenen der beidseitigen Anschlussflansche (1,3) liegt, und dass im Bereich der Teilungsebene (13) außerhalb des Durchströmquerschnittes zwei parallel zueinander ausgerichtete Führungselemente (16,17) an den beiden Gehäuseteilen (14,15) angeordnet sind, welche eine Relatiwerdrehung der beiden Teile (14,15) um 180° erlauben.

3. Einrichtung nach Anspruch 2, **dadurch gekennzeichnet, dass** an den Führungselementen (16,17) der beiden Gehäuseteile (14,15) zur Festlegung der gegenseitigen Position zusammenwirkende Ausnehmungen (18) und Vorsprünge (19) vorgesehen sind.

4. Einrichtung nach Anspruch 2 oder 3, **dadurch gekennzeichnet, dass** zur gegenseitigen Fixierung der beiden Gehäuseteile (14,15) zwischen den zusammenwirkenden Führungselementen (16,17) vorzugsweise stiftartig ausgebildete Einschubelemente in entsprechenden nutartigen Ausnehmungen (20) eingesteckt sind.

5. Einrichtung nach einem oder mehreren der Ansprüche 1 bis 4, **dadurch gekennzeichnet, dass** beide Gehäuseteile (14,15) sich zu ihren äußeren Anschlussflanschen (1,3) hin hinterschneidungsfrei stetig erweitern und in Spritz- oder Druckgusstechnik, vorzugsweise aus faserverstärkten Kunststoffen oder Aluminium, hergestellt sind.

## Claims

1. A device for regulating the conveyed quantity of rotary compressors, having a throttle valve (4), which changes the through-flow cross-section of the suction line in a manner capable of being regulated, and a non-return valve (7), which is arranged in a common housing (8) downstream of the said throttle valve in the through-flow direction, **characterized in that** the housing (8) is divided between the two valves (4, 7) in a separation plane (13) situated at an inclination to the planes of the attachment flanges (1, 3) on both sides and is capable of being assembled with different relative positions of the two housing parts (14, 15).

2. A device according to Claim 1, **characterized in that** the separation plane (13) is situated at an inclination of 45° to the planes - situated parallel to each other in a possible relative position of the two housing parts (14, 15) - of the attachment flanges (1, 3) on both sides, and in the region of the separation plane (13) outside the through-flow cross-section two guide elements (16, 17), which are orientated parallel to each other and which allow a relative movement of the two housing parts (14, 15) about 180°, are arranged on the two parts (14, 15).

3. A device according to Claim 2, **characterized in that** co-operating recesses (18) and projections (19) are provided on the guide elements (16, 17) of the two housing parts (14, 15) in order to fix the mutual position.

4. A device according to Claim 2 or 3, **characterized in that** insertion elements preferably designed in the manner of pins are inserted into corresponding groove-like recesses (20) in order to fix the two housing parts (14, 15) mutually between the co-operating guide elements (16, 17).

5. A device according to one or more of Claims 1 to 4, **characterized in that** the two housing parts (14, 15) are continuously enlarged without undercutting towards their free outer attachment flanges (1, 3), and are produced by injection moulding or die-casting, preferably from fibre-reinforced plastics materials or aluminium.

## Revendications

1. Dispositif pour réguler la quantité refoulée de compresseurs rotatifs comprenant une soupape à clapet d'étranglement (4) qui modifie de manière régulée la section transversale de passage de la conduite d'aspiration et une soupape à clapet antiretour (7) agencée derrière celle-ci dans la direction d'écoulement dans un boîtier commun (8), **caractérisé en ce que** le boîtier (8) est divisé entre les deux soupapes (4, 7) en un plan de division (13) disposé sous un angle par rapport aux plans des brides de raccordement sur les deux côtés (1, 3) et peut être assemblé avec différentes positions relatives des deux parties de boîtier (14, 15).

2. Dispositif selon la revendication 1, **caractérisé en ce que** le plan de division (13) est incliné de 45° par rapport aux plans des brides de raccordement sur les deux côtés (1, 3), lesquels sont parallèles entre eux dans une position relative possible des deux parties de boîtier (14, 15), et **en ce que** deux éléments de guidage (16, 17), orientés parallèlement l'un à l'autre, sont agencés sur les deux parties de boîtier (14, 15), dans la région du plan de division (13) en dehors de la section transversale d'écoulement, lesdits éléments de guidage permettant une rotation relative des deux parties (14, 15) de 180°.

3. Dispositif selon la revendication 2, **caractérisé en ce qu'**il est prévu, sur les éléments de guidage (16, 17) des deux parties de boîtier (14, 15), des évidements (18) et des saillies (19) qui coopèrent ensemble pour déterminer la position réciproque.

4. Dispositif selon l'une ou l'autre des revendications 2 et 3, **caractérisé en ce que** des éléments à insérer, réalisés de préférence à la manière de goupilles, sont enfichés entre les éléments de guidage (16, 17) coopérants, dans des évidements correspondants (20) en forme de rainure pour la fixation réciproque des deux parties de boîtier (14, 15).

5. Dispositif selon l'une ou plusieurs des revendications 1 à 4, **caractérisé en ce que** les deux parties de boîtier (14, 15) s'élargissent continuellement vers leurs brides de raccordement extérieures (1, 3) sans contre-dépouille et sont fabriquées suivant une technique de moulage par injection ou de moulage sous pression, de préférence à partir de matières plastiques renforcées de fibres ou d'aluminium.
